# FASCICULE DE BREVET EUROPEEN

(11) **EP 1 897 360 B1**
(45) Date de publication et mention de la délivrance du brevet: **10.02.2010**
(21) Numéro de dépôt: 06778967.7
(22) Date de dépôt: 23.06.2006
(51) Int. Cl.: H04M 15/00

(54) **DISPOSITIF ET PROCEDE POUR GERER DES CREDITS DE COMMUNICATION ASSOCIES A L'UTILISATION DE SERVICES PAR UN TERMINAL**
EINRICHTUNG UND VERFAHREN ZUM VERWALTEN VON MIT DER VERWENDUNG VON DIENSTEN DURCH EIN ENDGERÄT ASSOZIIERTEN KOMMUNIKATIONSGUTHABEN
DEVICE AND METHOD FOR MANAGING COMMUNICATION CREDITS ASSOCIATED TO USE OF SERVICES BY A TERMINAL

(30) Priorité: 23.06.2005 FR 0506416
(43) Date de publication de la demande: 12.03.2008
(73) Titulaire: FRANCE TELECOM, 75015 Paris (FR)
(72) Inventeur: BOUVIER, Hervé, F-13170 Les Pennes Mirabeau (FR); LECOURVOISIER, Jacques, F-38240 Meylan (FR); GROSSO, Julien, F-13005 Marseille (FR)
(74) Mandataire: Delumeau, François Guy
(86) Numéro de dépôt international: PCT/FR2006/050622
(87) Numéro de publication internationale: WO 2006/136759

(56) Documents cités:
- EP-A- 1 465 399
- EP-A- 1 560 448
- US-A1- 2003 027 549

## Description

### Arrière-plan de l'invention

La présente invention se rapporte au domaine général de la gestion des crédits de communication associés à l'usage d'un ou plusieurs services par un terminal.

L'invention se situe plus particulièrement dans le contexte dans lequel un dispositif client sollicite l'usage d'un service auprès d'un fournisseur de ce service sur un réseau de télécommunication.

Dans ce document, la notion de "service" est à comprendre au sens large. Elle recouvre en particulier les services de téléphonie, fixes ou mobiles, dans lesquels un premier correspondant établit une communication avec un deuxième correspondant à travers le réseau. Au moins l'un de ces correspondants peut être une plateforme de service.

La notion de service recouvre également toutes les applications d'accès à des sites Internet, par exemple pour le téléchargement de contenus.

Ces différents services ont au moins pour caractéristique commune le fait qu'ils utilisent des ressources d'un réseau de télécommunication.

De façon connue, l'utilisation de ces ressources est facturée au client, par exemple par l'opérateur du réseau ou une plateforme de service. A cet effet, chaque utilisateur ou client possède un crédit de communication associé à certains usages, ce crédit étant mesuré par une unité spécifique par exemple le kilooctet pour le téléchargement de données, ou le temps pour la téléphonie.

Ce crédit de communication est aussi connu sous le terme "godet" par l'homme du métier.

Bien entendu, il peut y avoir plusieurs godets pour un même usage. Par exemple, dans le cas du téléchargement d'un jeu, il peut y avoir un godet pour le volume téléchargé et un godet pour le coût unitaire de ce jeu.

Lorsqu'un dispositif client sollicite un service, le réseau de télécommunication lui alloue certaines ressources, celles-ci étant libérées lorsque le service associé à été rendu, à la fin d'un appel téléphonique ou après un téléchargement d'un fichier par exemple.

Pendant l'usage, ou à la libération des ressources réseau précitées, des détails de la communication regroupés sous l'appellation connue de "ticket d'usage" sont récupérés et traités par des composants spécifiques du réseau de communication en vue de la "valorisation" du service.

On rappelle ici que la "valorisation" consiste à associer à un usage, dont le détail est donné par le ticket d'usage, une valeur monétaire, cette valeur dépendant généralement de règles tarifaires souscrites par le client.

La valorisation des tickets d'usage associés à un client peut être traitée soit au fur et à mesure de leur collecte (valorisation "en temps réel"), soit une fois par jour, soit par lots (valorisation par "batch").

De façon connue, la valorisation d'un ticket d'usage implique la mise à jour du ou des godets relatifs au type de cet usage. Par exemple, si un client envoie un SMS, un godet associé à l'envoi de SMS sera mis à jour, et plus précisément décrémenté d'un certain nombre d'unités, diminuant d'autant le crédit de communication pour l'envoi des futurs SMS.

Les godets sont mémorisés dans le système centralisé d'informations de l'opérateur de télécommunication, et gérés par un logiciel de valorisation lui aussi centralisé.

Cette approche centralisée pose un certain nombre de problèmes, notamment pour la valorisation des tickets d'usage en temps réel, un tel traitement devant garantir que la durée de traitement comptée à partir de l'émission du ticket d'usage est bornée et minimale, typiquement inférieure à 1 seconde.

On comprend en effet que l'approche temps réel centralisée a ses limites en termes de performances notamment si le volume de tickets d'usage augmente de façon exponentielle, cette situation étant fortement susceptible de se produire avec le développement des services à fort contenu déployés sur des réseaux haut débit tels que UMTS, ADSL et EDGE.

En effet, on peut prévoir qu'à chaque demande de contenu un premier ticket sera émis pour l'établissement de la communication, c'est-à-dire pour le service de transport du contenu et au moins un deuxième ticket pour l'obtention de contenu proprement dit.

Inéluctablement, la centralisation du traitement en temps réel de tickets d'usage de plus en plus nombreux va engendrer des coûts croissants en termes de ressources de calcul et de mémoire pour les opérateurs. Associé à cette explosion de demandes, il sera par ailleurs de plus en plus difficile de garantir la durée bornée du traitement des tickets d'usage en temps réel.

L'état de la technique US2003 027549 comprend aussi un dispositif client apte à utiliser au moins un service sur un réseau de télécommunication, ce dispositif comportant des moyens pour mémoriser au moins un crédit de communication associé à ce service, et des moyens de mise à jour du crédit en fonction de l'utilisation du service par le client.

La gestion des crédits de communications s'effectue au sein des dispositifs client et non plus de façon centralisée chez l'opérateur de télécommunication. Ainsi, cette gestion est répartie sur les terminaux utilisateurs.

On répond ainsi au problème de garantir la durée de traitement des tickets d'usage en temps réel, même en cas de forte augmentation du nombre de ces tickets.

Le gestionnaire de crédit de communication associé à un service pourra par exemple être pré-installé dans le terminal d'un utilisateur, par exemple dans un téléphone mobile, en accord avec les équipementiers.

### Objet et résumé de l'invention

Le dispositif client selon l'invention comporte des moyens de réception d'une requête de mise à jour du crédit de communication reçue en provenance d'un fournisseur de ce service et des moyens d'envoi, préalablement à l'utilisation de ce service, d'une réponse représentative de la mise à jour effective du crédit de communication.

Cette caractéristique est particulièrement avantageuse lorsque le coût d'utilisation d'un service est un coût forfaitaire.

Dans un mode préféré de réalisation, le dispositif client comporte des moyens pour créer au moins un crédit de communication associé à un service pour lequel il ne gère pas ou plus de crédit de communication, et des moyens pour recevoir, en provenance d'un dispositif serveur, un crédit initial de communication associé à ce service.

Le gestionnaire de crédit pourra .par exemple être téléchargé dans l'agence d'un opérateur par un port infrarouge, une liaison USB ou conforme au standard Bluetooth.

En variante, le gestionnaire de crédit pourra être téléchargé en se connectant à distance à un serveur de l'opérateur, par exemple via le réseau Internet.

En variante, le dispositif client comportera des moyens de réception d'un message, par exemple sous forme de MMS ou de courrier électronique, ce message comportant des moyens pour installer automatiquement le gestionnaire de crédit de communications associé à un service particulier.

Préférentiellement, le dispositif client selon l'invention comporte des moyens pour envoyer, à destination d'un dispositif serveur, une requête pour augmenter le crédit de communication, les moyens de mise à jour précités étant adaptés à augmenter le crédit sur réception d'une réponse positive à cette requête reçue en provenance de ce serveur.

Corrélativement, l'invention concerne un dispositif serveur adapté à fournir un service accessible par un dispositif client tel que défini ci-dessus, ce dispositif serveur comportant des moyens d'envoi, au dispositif client, d'une requête de mise à jour d'un crédit de communication associé à l'utilisation du service par le dispositif client, et des moyens de réception, en provenance du dispositif client, d'une réponse représentative de la mise à jour effective du crédit de communication, cette réponse constituant une condition nécessaire à l'utilisation du service par le dispositif client.

Cette requête pourra par exemple être envoyée par le client lorsque le crédit de communication associé à un service en cours d'usage est nul ou inférieur à un seuil prédéterminé.

De façon préférée, les moyens de mise à jour du crédit de communication appliquent au moins une règle de mise à jour propre au service et/ou à l'utilisateur du client.

Ces règles de mise à jour seront généralement souscrites par l'utilisateur du dispositif client auprès d'un opérateur ou d'un fournisseur de service.

Dans un mode de réalisation particulier, le dispositif client selon l'invention comporte en outre des moyens pour évaluer par lui-même l'utilisation du service, la mise à jour du crédit de communication étant effectuée sur la base de cette évaluation propre.

Ainsi, on ne sollicite pas l'opérateur ou le fournisseur de service pour mesurer ou évaluer l'usage d'un service.

Dans une utilisation particulière de l'invention, on utilise la valeur d'un plusieurs godets pour faire bénéficier l'utilisateur d'une offre commerciale. Par exemple, on utilise un godet pour comptabiliser le nombre de SMS envoyés, et on offre un envoi gratuit de SMS tous les envois de dix SMS.

L'invention vise aussi un procédé de gestion de crédit de communication, susceptible d'être mis en oeuvre dans un dispositif client souhaitant utiliser au moins un service sur un réseau de télécommunication, ce procédé comportant :
- une étape de mémorisation, au sein du client, d'au moins un crédit de communication associé à l'utilisation du service ;
- une étape de réception, en provenance d'un fournisseur de service, d'une requête de mise à jour du crédit de communication ;
- une étape de mise à jour du crédit en fonction de l'utilisation du service par le client ; et
- une étape d'envoi d'une réponse de confirmation à destination du fournisseur de service.

Selon une implémentation préférée, les différentes étapes du procédé de gestion sont déterminées par des instructions de programmes d'ordinateurs.

En conséquence, l'invention vise aussi un programme d'ordinateur sur un support d'informations, ce programme étant susceptible d'être mis en oeuvre dans un ordinateur, ce programme comportant des instructions adaptées à la mise en oeuvre du procédé de gestion mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

De façon privilégiée, le dispositif client selon l'invention sera inclus dans un terminal apte à utiliser une pluralité de services sur le réseau de télécommunication. Il pourra alors être utilisé, pour envoyer aux dispositifs serveurs donnant accès à ces services, des messages indépendants les uns des autres, traités par ces serveurs pour autoriser ou refuser l'accès aux services précités. Ces messages seront établis par le dispositif client, en fonction de crédits de communication associés à ces services, ces crédits étant gérés et mémorisés par le dispositif client.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, dans son environnement, un dispositif client conforme à l'invention dans un mode préféré de réalisation ; et
- la figure 2 représente les principales étapes d'un scénario d'utilisation du dispositif client de la figure 1.

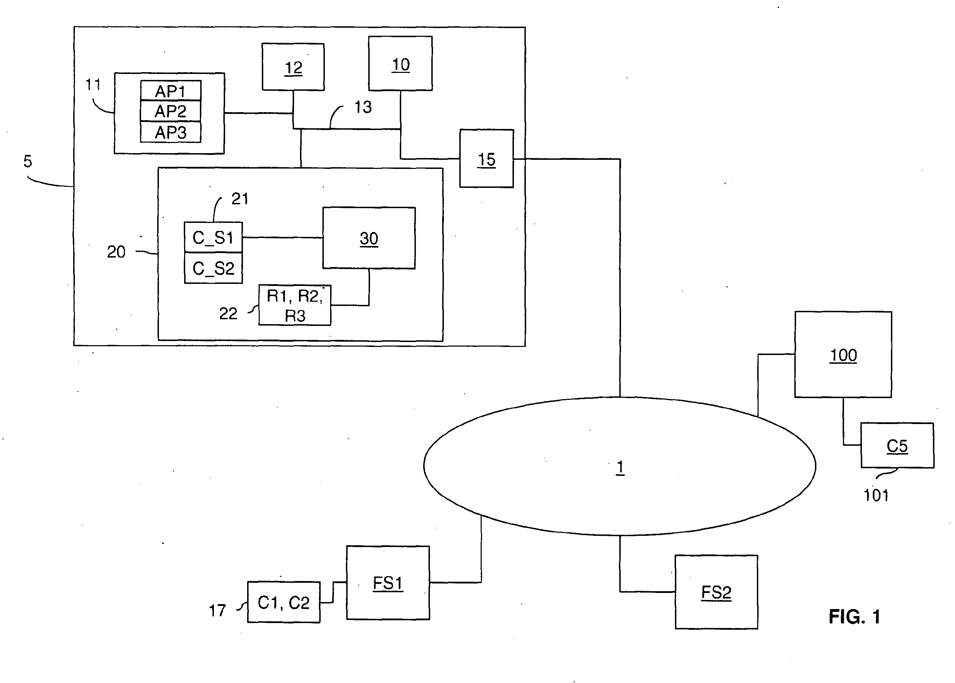

La figure 1 représente un terminal 5 relié à un réseau de télécommunication 1.

Dans l'exemple décrit ici, le terminal 5 est un téléphone mobile et le réseau de télécommunication 1 le réseau UMTS.

De façon connue, le terminal 5 comporte un processeur 10, une mémoire morte 11 de type ROM, dans laquelle sont mémorisés des programmes applicatifs AP1, AP2, AP3, et une mémoire vive 12 pour mémoriser des variables nécessaires à l'exécution de ces programmes.

Dans l'exemple décrit ici :
- le programme AP1 est un programme de jeu en réseau ;
- le programme AP2 est une application d'envoi et de réception de SMS ; et
- le programme applicatif AP3 est un programme de téléchargement de fichiers musicaux.

L'équipement mobile 5 comporte également des moyens de communication connus 15 pour envoyer et recevoir des données conformément au protocole UMTS.

Sur le réseau 1 nous avons également - représenté deux fournisseurs de service FS1 et FS2.

Le fournisseur de service FS1 est adapté à fournir au client 5 un service de jeu en réseau ainsi que des fichiers musicaux.

Dans la suite de la description nous supposerons que le fournisseur FS1 comporte une mémoire 17 dans laquelle les coûts suivants sont mémorisés :
- C1 : action de jeu : une unité (ou jeton) ; et
- C2 : nouveau palier : deux unités.

Dans l'exemple décrit ici, le fournisseur de service FS2 est un opérateur du réseau 1, mettant en oeuvre un service de messagerie SMS.

Le terminal 5 comporte un dispositif client 20 conforme à l'invention pour gérer des crédits de communication associés aux services de jeu en réseau, de SMS et de téléchargement de musique.

Dans l'exemple décrit ici, nous supposerons que ce dispositif 20 gère un premier crédit de communication C_S1 associé à la fois aux services de jeu en réseau et de téléchargement de musique et un deuxième crédit de communication C_S2 pour l'envoi de SMS.

Dans l'exemple décrit ici, les deux crédits de communications C_S1, C_S2 sont mémorisés dans une première mémoire non volatile 21 interne au dispositif client 20.

En variante, ces crédits de communication pourraient être mémorisés dans une mémoire non volatile du terminal 5.

Conformément à l'invention, le dispositif client 20 comporte des moyens 30 pour gérer les deux crédits de communication C_S1 et C_S2 en fonction de l'utilisation des services précités.

Ces moyens 30 de gestion sont notamment adaptés à mettre à jour les crédits de communication C_S1 et C_S2 et à créer un crédit de communication associé à un service pour lequel le dispositif client 20 ne gère pas ou ne gère plus de crédit de communication.

Le processeur 10, la mémoire morte 11, la mémoire vive 12, les moyens de communication 15 et le dispositif client 20 sont reliés entre eux par un bus 13 connu en soi par l'homme du métier.

Nous supposerons que les moyens 30 de mise à jour des crédits de communication étaient pré-installés dans le terminal 5 au moment de l'achat de celui-ci par l'utilisateur.

Nous supposerons également que le crédit de communication C_S2 associé aux services de SMS était initialisé avec un crédit de cinq godets.

Le dispositif client 20 comporte également une deuxième mémoire 22 non volatile dans laquelle sont mémorisées deux règles R1, R2 de mise à jour du crédit de communication CS_2:
- R1 : décrémenter CS_2 d'une unité pour l'envoi d'un SMS ;
- R2 augmenter CS_2 de deux unités après l'envoi de dix SMS ; et une règle R3 de mise à jour du crédit de communication CS_1 :
- R3 : téléchargement de musique : deux unités.

Sur cette figure, on a référencé 100 un serveur dont la fonction principale est de fournir des unités au terminal 5 pour l'utilisation de services sur le réseau 1, ces unités étant gérées par le dispositif client 20 pour incrémenter les crédits de communication CS_1 et CS_2.

Dans le mode préféré de réalisation décrit ici, le serveur 100 accorde des unités au terminal 5 en fonction de l'état d'un compte C5 associé à ce terminal. Le compte C5 peut par exemple être rechargé par l'utilisateur du terminal 5 moyennant paiement.

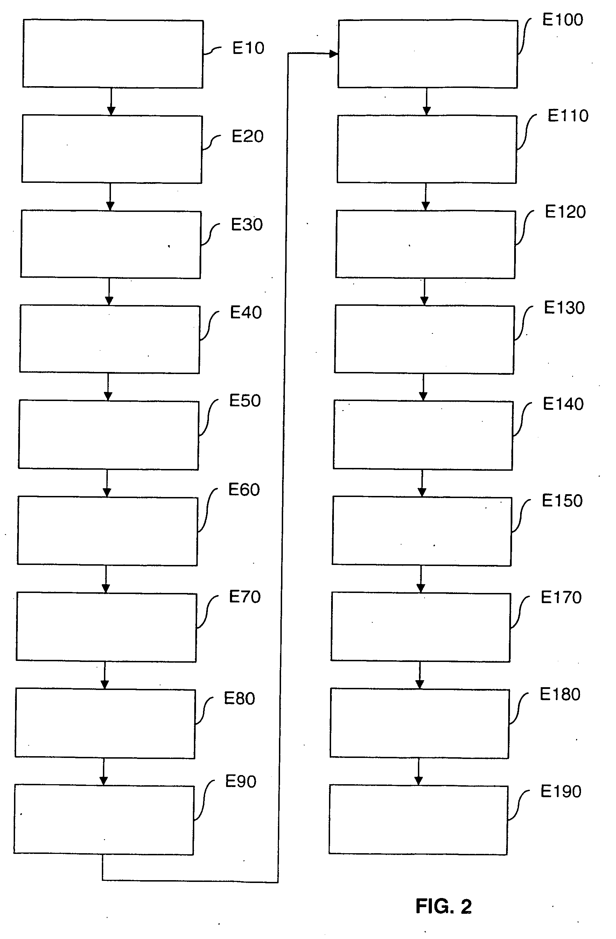

Nous allons maintenant décrire en référence à la figure 2 un scénario d'utilisation du terminal 5.

On supposera dans ce scénario que l'utilisateur du terminal 5 souhaite jouer en réseau. Pour cela, il démarre l'application AP1 de son terminal. Celle-ci sollicite, par l'envoi d'une requête de jeu, le fournisseur de réseau FS1 via les moyens 15 de communication du terminal, au cours d'une première étape E10 de ce scénario.

Sur réception de cette requête de jeu, nous supposerons que le fournisseur de service FS1 authentifie le terminal 5 et l'enregistre sur sa plate-forme de sorte que ce terminal est connu des autres joueurs.

Nous supposerons que l'utilisateur du terminal 5 commence à jouer, qu'il effectue un certain nombre d'actions de jeu et que l'une d'entre elles requiert la dépense d'une unité, conformément au coût C1 fixé par le fournisseur de service FS1.

Cette unité est réclamée, dans l'exemple décrit ici, par le fournisseur de service FS1 qui envoie par l'envoi d'une requête au dispositif client 20, au cours d'une étape E20.

Etant donné que le dispositif client 30 ne gère pas à cet instant de crédit de communication associé au service de jeu en réseau, le gestionnaire 30 du dispositif client 20 crée, au cours d'une étape E30, un nouveau crédit de communication C_S1 associé à ce service.

Cette étape E30 de création de crédit de communication est suivie par une étape E40 au cours de laquelle le dispositif client 30 envoie, au serveur 100, une requête pour augmenter le crédit de communication associé au service de jeu en réseau.

Nous supposerons ici l'état du compte C5 permet au serveur 100 de répondre positivement à cette requête. Le serveur 100 envoie une réponse autorisant le gestionnaire de crédit 30 à augmenter le crédit de communication C_S1 de cinq unités, cette réponse étant reçue à l'étape E50. Au cours de cette même étape le serveur 100 décrémente la valeur C5 de cinq unités.

Le godet C_S1 est donc décrémenté d'une unité (coût C1) au cours d'une étape E60. A l'issue de cette étape, le crédit de communication C_S1 est donc de quatre unités. Au cours de cette même étape E60, le dispositif client 20 envoie un message de confirmation au fournisseur de service FS1, représentatif du fait que le crédit CS_1 a été mis à jour. Le fournisseur de service FS1 autorise donc la poursuite du jeu.

L'étape E60 est suivie par une étape de jeu proprement dite. On supposera que l'accès à un nouveau palier de ce jeu nécessite deux unités (coût C2). Le gestionnaire de crédit 30 vérifie ainsi, au cours d'une étape E70, que le godet C_S1 associé au jeu en réseau contient suffisamment d'unités, au moins deux en l'espèce. Comme c'est le cas, le gestionnaire de crédit 30 décrémente alors ce godet C_S1 au cours d'une étape E80. Le crédit C_S1 comporte désormais deux unités. Au cours de cette même étape E80, le dispositif client 20 envoie un message de confirmation au fournisseur de service FS1, représentatif du fait que le crédit CS_1 a été mis à jour. Le fournisseur de service FS1 autorise donc la poursuite du jeu.

Nous supposerons maintenant que l'utilisateur du terminal 5 souhaite envoyer un message par SMS à un autre joueur dont il a obtenu un pseudonyme au cours du jeu.

Pour cela, l'application AP2 sollicite, au cours d'une étape E90, le fournisseur de service SMS FS2. Avant de rendre ce service de SMS, le fournisseur de service FS2 envoie, au dispositif client, une requête de mise à jour du crédit de communication associé au service de SMS. Cette requête est reçue par le gestionnaire de crédit 30 au cours d'une étape E100.

Sur réception de cette requête, le gestionnaire de crédit 30 décrémente le godet C_S2 d'une unité conformément à la règle de mise à jour R1 (étape E110).

L'étape E110 de mise à jour du crédit C_S2 est suivie par une étape E120 au cours de laquelle le dispositif client 20 selon l'invention envoie une réponse de confirmation à destination du fournisseur de service FS2.

Sur réception de ce message de confirmation, le fournisseur de service FS2 achemine le SMS du terminal client 5 à son destinataire.

Nous supposerons maintenant que l'utilisateur du dispositif client 5 souhaite acheter un morceau de musique disponible auprès du fournisseur de service FS1.

A cet effet, l'application de téléchargement AP3 émet, au cours d'une étape E130, une requête auprès du fournisseur de service FS1. Dans cet exemple, le dispositif 20 selon l'invention gère par lui-même la mise à jour du crédit de communication associé au téléchargement de musique, conformément à la règle R3, c'est-à-dire en décrémentant, au cours d'une étape E140, le crédit de communication C_S1 de deux unités.

A l'issue de cette étape E140, le godet C_S1 est vide. Au cours de cette même étape E140, le dispositif client 20 envoie un message de confirmation au fournisseur de service FS1, représentatif du fait que le crédit CS_1 a été mis à jour. Le fournisseur de service FS1 permet en conséquence le téléchargement du morceau de musique.

Nous supposerons que le terminal 5 reçoit le morceau de musique en provenance du fournisseur de service FS1 pendant que l'utilisateur continue à jouer et que le fournisseur de service FS1 demande, au cours d'une étape E150, une unité supplémentaire pour une nouvelle action de jeu (coût C1).

Comme nous l'avons vu précédemment, le godet C_S1 est vide à cet instant.

En conséquence, le gestionnaire 30 émet, à destination du fournisseur de service 100, une requête pour augmenter le crédit de communication (étape E170).

Ce serveur 100 décrémente ici le compte C5 du terminal 5 et envoie à destination du gestionnaire 30 une réponse représentative d'un accord pour augmenter le crédit du godet C_S1 de cinq unités (étape E180).

Sur réception de cette réponse positive, les moyens de mise à jour du godet C_S1 augmentent (étape E190) ce godet de cinq unités puis décrémentent ce même godet d'une unité pour que la demande de service soit servie (règle C1). Le godet C_S1 comporte alors quatre unités.

Au cours de cette même étape E190, le dispositif client 20 envoie un message de confirmation au fournisseur de service FS1, représentatif du fait que le crédit CS_1 a été mis à jour. Le fournisseur de service FS1 permet en conséquence le déroulement d'une nouvelle action de jeu.

Lorsque le client arrête de jouer, la valeur des godets C_S1, C_S2 est conservée dans la mémoire non volatile 21.

Dans l'exemple décrit ici, le terminal 5 est un téléphone mobile. L'invention peut aussi être utilisée quel que soit le type de ce terminal (ordinateur personnel, téléphone fixe...). L'invention s'applique en particulier aux terminaux adaptés à mettre en oeuvre le protocole SIP (Session Initiation Protocol) et aux passerelles domestiques.

L'invention ne se limite pas à un usage de client à client mais couvre aussi les applications de type client-serveur.

## Revendications

1. Dispositif client (20) apte à utiliser au moins un service sur un réseau de télécommunication (1), comportant des moyens (21) pour mémoriser au moins un crédit de communication associé audit service, et des moyens (30) de mise à jour dudit crédit (C_S1, C_S2) en fonction de l'utilisation dudit service par ledit client (20), **caractérisé en ce qu'**il comporte des moyens (15) de réception d'une requête de mise à jour dudit crédit de communication (C_S1) reçue en provenance d'un fournisseur dudit service (FS1, FS2), et des moyens (15) d'envoi, préalablement à l'utilisation dudit service, d'une réponse représentative de la mise à jour effective dudit crédit de communication (C_S1).

2. Dispositif client suivant la revendication 1, **caractérisé en ce qu'**il comporte des moyens (30) pour créer au moins un crédit de communication (C_S2) associé à un service pour lequel il ne gère pas ou plus de crédit de communication, et des moyens pour recevoir, en provenance d'un dispositif serveur (100), un crédit initial de communication associé à ce service.

3. Dispositif client suivant la revendication 1 ou 2, **caractérisé en ce qu'**il comporte des moyens (15) pour envoyer, à destination d'un dispositif serveur (100), une requête pour augmenter ledit crédit de communication, et **en ce que** lesdits moyens (30) de mise à jour sont adaptés à augmenter ledit crédit (C_S1) sur réception d'une réponse positive à ladite requête reçue en provenance dudit serveur (100).

4. Dispositif client suivant l'une quelconque des revendications 1 à 3, **caractérisé en ce que** lesdits moyens (30) de mise à jour appliquent au moins une règle (R1-R3) de mise à jour propre audit service et/ou à l'utilisateur dudit client (20).

5. Dispositif client selon l'une quelconque des revendications 1 à 4, **caractérisé en ce qu'**il comporte des moyens pour évaluer par lui-même une utilisation dudit service, et **en ce que** les moyens de mise à jour (30) utilisent le résultat de ladite évaluation pour mettre à jour ledit crédit de communication.

6. Dispositif serveur (FS1, FS2) adapté à fournir un service accessible par un dispositif client (20) selon la revendication 1, **caractérisé en ce qu'**il comporte des moyens d'envoi, audit dispositif client (20), d'une requête de mise à jour d'un crédit de communication (C_S1, C_S2) associé à l'utilisation dudit service par ledit dispositif client, et des moyens de réception, en provenance dudit dispositif client, d'une réponse représentative de la mise à jour effective dudit crédit de communication, ladite réponse constituant une condition nécessaire à l'utilisation dudit service par ledit dispositif client.

7. Procédé de gestion de crédit de communication, susceptible d'être mis en oeuvre dans un dispositif client souhaitant utiliser au moins un service sur un réseau de télécommunication, **caractérisé en ce qu'**il comporte :
- une étape de mémorisation, au sein dudit client, d'au moins un crédit de communication associé à l'utilisation dudit service ;
- une étape (E100) de réception, en provenance d'un fournisseur de service (FS2), d'une requête de mise à jour dudit crédits de communication ;
- une étape (E110) de mise à jour dudit crédit en fonction de l'utilisation dudit service par ledit client ; et
- une étape (E120) d'envoi d'une réponse de confirmation à destination dudit fournisseur de service (FS2).

8. Programme d'ordinateur comportant des instructions pour l'exécution des étapes du procédé de gestion selon la revendication 7 lorsque ledit programme est exécuté par un ordinateur.

9. Support d'enregistrement lisible par un ordinateur sur lequel est enregistré un programme d'ordinateur comprenant des instructions pour l'exécution des étapes du procédé de gestion selon la revendication 7.

10. Terminal (5) apte à utiliser une pluralité de services sur un réseau de télécommunication (1), **caractérisé en ce qu'**il comporte un dispositif client (20) selon l'une quelconque des revendications 1 à 5 pour envoyer aux dispositifs serveurs (FS1, FS2) donnant accès à ces services, des messages indépendants les uns des autres, traités par lesdits serveurs pour autoriser ou refuser l'accès auxdits services, en fonction de crédits de communication (CS_1, C_S2), associés auxdits services, gérés et mémorisés par ledit dispositif client (20).

## Claims

1. Client device (20) able to use at least one service on a telecommunication network (1), comprising means (21) for storing at least one communication credit associated with said service, and means (30) for updating said credit (C_S1, C_S2) as a function of the use of said service by said client (20), **characterized in that** it comprises means (15) for receiving a request to update said communication credit (C_S1), received from a supplier of said service (FS1, FS2), and means (15) for dispatching, prior to the use of said service, a response representative of the actual updating of said communication credit (C_S1).

2. Client device in accordance with Claim 1, **characterized in that** it comprises means (30) for creating at least one communication credit (C_S2) associated with a service for which it does not manage or no longer manages any communication credit, and means for receiving, from a server device (100), an initial communication credit associated with this service.

3. Client device in accordance with Claim 1 or 2, **characterized in that** it comprises means (15) for dispatching, to a server device (100), a request to increase said communication credit, and **in that** said updating means (30) are adapted for increasing said credit (C_S1) on receipt of a positive response to said request received from said server (100).

4. Client device in accordance with any one of Claims 1 to 3, **characterized in that** said updating means (30) apply at least one updating rule (R1-R3) specific to said service and/or to the user of said client (20).

5. Client device according to any one of Claims 1 to 4, **characterized in that** it comprises means for evaluating by itself a use of said service, and **in that** the updating means (30) use the result of said evaluation to update said communication credit.

6. Server device (FS1, FS2) adapted for providing a service accessible by a client device (20) according to Claim 1, **characterized in that** it comprises means for dispatching, to said client device (20), a request to update a communication credit (C_S1, C_S2) associated with the use of said service by said client device, and means for receiving, from said client device, a response representative of the actual updating of said communication credit, said response constituting a necessary condition for the use of said service by said client device.

7. Communication credit management method, able to be implemented in a client device wishing to use at least one service on a telecommunication network, **characterized in that** it comprises:
- a step of storing, within said client, at least one communication credit associated with the use of said service;
- a step (E100) of receiving, from a service provider (FS2), a request to update said communication credit;
- a step (E110) of updating said credit as a function of the use of said service by said client; and
- a step (E120) of dispatching a confirmation response to said service provider (FS2).

8. Computer program comprising instructions for executing the steps of the management method according to Claim 7 when said program is executed by a computer.

9. Recording medium readable by a computer on which is recorded a computer program comprising instructions for executing the steps of the management method according to Claim 7.

10. Terminal (5) able to use a plurality of services on a telecommunication network (1), **characterized in that** it comprises a client device (20) according to any one of Claims 1 to 5 for dispatching to the server devices (FS1, FS2) affording access to these services, mutually independent messages, processed by said servers so as to authorize or deny access to said services, as a function of communication credits (CS_1, C_S2), associated with said services, managed and stored by said client device (20).

## Patentansprüche

1. Client-Vorrichtung (20), die mindestens einen Dienst in einem Telekommunikationsnetz (1) nutzen kann, mit Einrichtungen (21) zum Speichern mindestens eines dem Dienst zugeordneten Kommunikationsguthabens, und mit Einrichtungen (30) zur Aktualisierung des Guthabens (C_S1, C_S2) in Abhängigkeit von der Nutzung des Diensts durch den Client (20), **dadurch gekennzeichnet, dass** sie Einrichtungen (15) zum Empfang einer Anforderung zur Aktualisierung des Kommunikationsguthabens (C_S1), die von einem Anbieter des Diensts (FS1, FS2) empfangen wird, und Einrichtungen (15) zum Senden einer Antwort vor der Nutzung des Diensts aufweist, die für die effektive Aktualisierung des Kommunikationsguthabens (C_S1) repräsentativ ist.

2. Client-Vorrichtung nach Anspruch 1, **dadurch gekennzeichnet, dass** sie Einrichtungen (30), um mindestens ein Kommunikationsguthaben (C_S2) zu erzeugen, das einem Dienst zugeordnet ist, für den sie kein Kommunikationsguthaben oder kein Kommunikationsguthaben mehr verwaltet, und Einrichtungen aufweist, um von einer Server-Vorrichtung (100) ein diesem Dienst zugeordnetes Anfangs-Kommunikationsguthaben zu empfangen.

3. Client-Vorrichtung nach Anspruch 1 oder 2, **dadurch gekennzeichnet, dass** sie Einrichtungen (15) aufweist, um eine Anforderung zur Erhöhung des Kommunikationsguthabens an eine Server-Vorrichtung (100) zu senden, und dass die Aktualisierungseinrichtungen (30) geeignet sind, um das Guthaben (C_S1) bei Empfang einer vom Server (100) kommenden positiven Antwort auf die Anforderung zu erhöhen.

4. Client-Vorrichtung nach einem der Ansprüche 1 bis 3, **dadurch gekennzeichnet, dass** die Aktualisierungseinrichtungen (30) mindestens eine Aktualisierungsregel (R1-R3) anwenden, die für den Dienst und/oder den Benutzer der Client-Vorrichtung (20) spezifisch ist.

5. Client-Vorrichtung nach einem der Ansprüche 1 bis 4, **dadurch gekennzeichnet, dass** sie Einrichtungen aufweist, um selbst eine Nutzung des Diensts auszuwerten, und dass die Aktualisierungseinrichtungen (30) das Ergebnis der Auswertung verwenden, um das Kommunikationsguthaben zu aktualisieren.

6. Server-Vorrichtung (FS1, FS2), die geeignet ist, um einen für eine Client-Vorrichtung (20) nach Anspruch 1 zugänglichen Dienst zu liefern, **dadurch gekennzeichnet, dass** sie Einrichtungen zum Senden einer Anforderung zur Aktualisierung eines der Nutzung dieses Diensts durch die Client-Vorrichtung zugeordneten Kommunikationsguthabens (C_S1, C_S2) an die Client-Vorrichtung (20) und Einrichtungen zum Empfang einer Antwort von der Client-Vorrichtung aufweist, die für die effektive Aktualisierung des Kommunikationsguthabens repräsentativ ist, wobei die Antwort eine notwendige Bedingung für die Nutzung des Diensts durch die Client-Vorrichtung darstellt.

7. Verfahren zur Verwaltung eines Kommunikationsguthabens, das in einer Client-Vorrichtung angewendet werden kann, die mindestens einen Dienst in einem Telekommunikationsnetz nutzen möchte, **dadurch gekennzeichnet, dass** es aufweist:
- einen Schritt der Speicherung mindestens eines der Nutzung des Diensts zugeordneten Kommunikationsguthabens innerhalb des Clients;
- einen Schritt (E100) des Empfangs einer Aufforderung zur Aktualisierung des Kommunikationsguthabens von einem Dienstanbieter (FS2);
- einen Schritt (E110) der Aktualisierung des Guthabens in Abhängigkeit von der Nutzung des Diensts durch den Client; und
- einen Schritt (E120) des Sendens einer Bestätigungsantwort an den Dienstanbieter (FS2).

8. Computerprogramm, das Anweisungen zur Ausführung der Schritte des Verwaltungsverfahrens nach Anspruch 7 aufweist, wenn das Programm von einem Computer ausgeführt wird.

9. Computerlesbarer Aufzeichnungsträger, auf dem ein Computerprogramm aufgezeichnet ist, das Anweisungen zur Ausführung der Schritte des Verwaltungsverfahrens nach Anspruch 7 aufweist.

10. Endgerät (5), das mehrere Dienste in einem Telekommunikationsnetz (1) nutzen kann, **dadurch gekennzeichnet, dass** es eine Client-Vorrichtung (20) nach einem der Ansprüche 1 bis 5 aufweist, um an die Server-Vorrichtungen (FS1, FS2), die Zugang zu diesen Diensten gewähren, voneinander unabhängige Mitteilungen zu senden, die von den Servern verarbeitet werden, um den Zugang zu den Diensten zu genehmigen oder zu verweigern, in Abhängigkeit von den Diensten zugeordneten Kommunikationsguthaben (C_S1, C_S2), die von der Client-Vorrichtung (20) verwaltet und gespeichert werden.
